(19) **Europäisches Patentamt**
**European Patent Office**
**Office européen des brevets**

(11) **EP 1 293 062 B1**

(12) **FASCICULE DE BREVET EUROPEEN**

(45) Date de publication et mention
de la délivrance du brevet:
**10.03.2010 Bulletin 2010/10**

(21) Numéro de dépôt: **01947597.9**

(22) Date de dépôt: **22.06.2001**

(51) Int Cl.:
***H04L 9/32*** *(2006.01)*

(86) Numéro de dépôt international:
**PCT/FR2001/001989**

(87) Numéro de publication internationale:
**WO 2001/099337 (27.12.2001 Gazette 2001/52)**

(54) **PROCEDE D'AUTHENTIFICATION / IDENTIFICATION BIOMETRIQUE SECURISE , MODULE DE SAISIE ET MODULE DE VERIFICATION DE DONNEES BIOMETRIQUES**

VERFAHREN ZUR GESICHERTEN BIOMETRISCHEN AUTHENTIFIZIERUNG ODER IDENTIFIZIERUNG, ERFASSUNGSMODUL UND MODUL ZUR PRÜFUNG BIOMETRISCHER DATEN

METHOD FOR SECURE BIOMETRIC AUTHENTICATION/IDENTIFICATION, BIOMETRIC DATA INPUT MODULE AND VERIFICATION MODULE

(84) Etats contractants désignés:
**AT BE CH CY DE DK ES FI FR GB GR IE IT LI LU MC NL PT SE TR**

(30) Priorité: **23.06.2000 FR 0008070**

(43) Date de publication de la demande:
**19.03.2003 Bulletin 2003/12**

(73) Titulaire: **Gula Consulting Limited Liability Company**
**Dover, DE 19904 (US)**

(72) Inventeurs:
• **GUERIN, Didier**
**F-14000 Caen (FR)**
• **GIRAULT, Marc**
**F-14000 Caen (FR)**

(74) Mandataire: **Desormiere, Pierre-Louis et al**
**Cabinet Beau de Loménie**
**158, rue de l'Université**
**75340 Paris Cedex 07 (FR)**

(56) Documents cités:
**EP-A- 0 986 209       WO-A-00/00882**
**WO-A-98/25385       US-A- 5 351 295**

## Description

La présente invention concerne un procédé d'authentification/identification de données biométriques sécurisé.

On parlera dans la suite de procédé d'authentification pour simplifier.

L'invention concerne également un module de saisie de données biométriques et un module de vérification desdites données permettant de mettre en oeuvre le procédé, la coopération de ces modules entrant dans la réalisation d'un système d'authentification.

L'invention s'applique tout particulièrement au domaine de l'authentification ou de l'identification biométrique avec vérification par un dispositif placé à distance au travers d'un réseau de communication.

Par module de saisie de données biométriques on entend tout dispositif tel qu'un capteur biométrique permettant de relever les éléments biométriques d'un utilisateur du système d'authentification.

Par module de vérification de données biométriques on entend tout dispositif capable de traiter des informations biométriques pour les vérifier et vérifier leur authenticité. Il peut s'agir d'un ordinateur informatique ou d'une carte électronique spécifique placée dans un système de traitement.

On connaît du brevet publié le 23 juillet 1998 sous le numéro WO98/3209 un procédé de lutte contre le rejeu des données biométriques.

Par rejeu, on entend toute action malveillante consistant à capter les données biométriques d'un utilisateur du système d'authentification pour les envoyer au dispositif de vérification et se faire ainsi passer pour cet utilisateur.

Le procédé décrit dans cette demande repose sur le fait que les éléments biométriques caractéristiques également appelés « minuties » n'ont jamais la même valeur entre deux saisies. Le procédé décrit trouve une limitation dans le fait qu'il faut stocker les « minuties » reçues des précédents essais d'authentification et d'identification et dans le fait qu'il ne permet pas de se prémunir de données rejouées après avoir été légèrement modifiées de façon volontaire afin de tromper le système.

Il existe également des systèmes permettant la mise en oeuvre d'un procédé biométrique avec vérification à distance des minuties et donc l'envoi de données au travers d'un réseau de communication.

Dans ce cas, soit les solutions proposées ne prennent pas en compte les problèmes liés au vol et au rejeu de données, soit elles associent des secrets cryptographiques dans les différents modules du système. On pourra trouver une telle solution par exemple dans la demande de brevet publiée le 06 novembre 1998 sous le numéro WO/9825385. En effet, le procédé décrit dans ce brevet protège les données contre une écoute sur la ligne mais ne permet pas de lutter contre le rejeu de données. Les deux modules en communication disposent d'un couple de clés privées publiques propres.

Dans le cas de secrets présents dans les différents modules du système, on peut craindre le vol du ou des secret(s) stocké(s) dans ces différents modules. Le vol du ou des secret (s) stocké(s) dans les différents modules peut occasionner le vol des modules eux-mêmes et tout particulièrement du module de saisie biométrique qui est placé auprès du public.

Toutefois dans certaines-solutions existantes les modules et notamment le module de saisie biométrique, peuvent ne pas mémoriser de secret en interne mais il est nécessaire alors que le secret soit apporté par l'utilisateur, au moyen par exemple d'une carte à puce ou d'un badge.

De tels systèmes sont décrits par exemple dans la demande de brevet publiée le 24 mars 1999 sous le numéro GB 2329499 ou dans la demande de brevet publiée le 27 janvier 1998 sous le numéro WO/9705578.

Avec cette dernière solution, la simplicité d'utilisation et l'ergonomie de la biométrie s'estompent puisque l'utilisateur est porteur d'un outil physique (une carte à puce ou un badge).

Le document EP-A-0 986 209 divulgue un procédé d'authentification biométrique permettant la transmission sous forme chiffrée de données biométriques entre un module biométrique local ne détenant pas de clé secrète et un module distant de vérification.

La présente invention a pour but de remédier à ces inconvénients.

L'invention permet en effet de fournir un procédé d'authentification ou d'identification biométrique organisé autour de modules de saisie biométriques raccordés, au moyen d'un réseau de communication non nécessairement sécurisé, à un ou plusieurs modules de vérification biométriques, tout en évitant les attaques par rejeu de données sans contraindre l'utilisateur au port d'un objet physique (carte à puce) et sans nécessiter la présence d'un ou de plusieurs secrets dans le ou les module (s) de saisie biométriques.

Ainsi, l'invention propose un procédé biométrique sécurisé comprenant un élément de sécurité contre le rejeu de données et un élément cryptographique assurant la confidentialité des données, aucun de ces éléments ne requérant la présence d'un secret à l'endroit où les caractéristiques biométriques sont saisies, lesdites données incluant des données biométriques telles que des minuties.

La sécurité s'applique entre un module biométrique local, dénommé module de saisie biométrique et un module distant, dénommé module de vérification biométrique.

La mise en oeuvre du procédé est transparente pour l'utilisateur souhaitant être authentifié. Ce dernier ne nécessite le port d'aucun outil physique destiné à la mise en oeuvre du procédé. Il ne nécessite pas non plus que le module de vérification biométrique mémorise des valeurs à chaque authentification.

Le procédé proposé permet en particulier d'effectuer cette authentification à partir de modules biométriques distants du module de vérification et reliés par exemple à travers un réseau de communication ne nécessitant pas de sécurité particulière.

Le procédé d'authentification proposé permet de ne pas avoir à stocker un secret dans le module de saisie biométrique. Il permet également de garantir le non rejeu d'un envoi de données biométriques.

L'invention s'applique aux systèmes biométriques en général.

La présente invention a donc plus particulièrement pour objet un procédé d'authentification biométrique sécurisé, comprenant la communication de données biométriques chiffrées à un module de vérification, principalement caractérisé en ce qu'il consiste à chiffrer les données biométriques par un algorithme cryptographique et en ce qu'il consiste à introduire pour chaque opération cryptographique réalisée une valeur de diversification différente.

Selon un mode de réalisation, la valeur de diversification est générée par le module de vérification et communiquée au module de saisie des données biométriques.

Dans un exemple de procédé d'authentification biométrique sécurisé, la valeur de diversification est générée par le module de saisie et par le module de vérification.

La valeur de diversification est associée à la donnée biométrique, l'opération de chiffrement étant effectuée sur la donnée obtenue par cette association.

Selon une variante, la valeur de diversification est une donnée aléatoire.

Selon une variante, la valeur de diversification est le résultat d'un comptage.

Selon une autre variante, la valeur de diversification est une donnée temporelle (date, heure).

Selon un mode de réalisation, l'algorithme de chiffrement est un algorithme asymétrique à clé publique.

Selon une variante la clé publique du module de vérification est communiquée au(x) module(s) de saisie par le module de vérification à chaque demande d'authentification.

Selon une autre variante la clé publique est stockée dans le module de saisie de données biométriques.

Selon une autre variante, la clé stockée dans le module de saisie est une clé de vérification d'un certificat, ledit certificat étant le certificat de la clé publique du module de vérification et étant communiqué par ce dernier au module de saisie.

Selon un autre mode de réalisation, l'algorithme de chiffrement est un algorithme symétrique à clé secrète.

Avantageusement, la clé secrète est générée par le module de saisie.

Avantageusement, la clé secrète est chiffrée par un algorithme asymétrique et le résultat du chiffrement est communiqué au module vérifieur pour lui permettre de déchiffrer les données biométriques.

L'invention a également pour objet, un module de saisie de données biométriques, principalement caractérisé en ce qu'il comporte des moyens pour effectuer des opérations de cryptographie pour chiffrer des données biométriques et introduire une valeur de diversification différente pour chaque opération selon l'une quelconque des revendications précédentes.

Selon une autre caractéristique, la valeur de diversification est générée par le module lui-même ou fournie par l'extérieur.

L'invention a aussi pour objet, un module de vérification de données biométriques, principalement caractérisé en ce qu'il comporte des moyens pour effectuer des opérations de cryptographie pour déchiffrer des données biométriques chiffrées reçues à travers un réseau de communication et contenant une valeur de diversification différente pour chaque donnée biométrique chiffrée.

Avantageusement, le module de vérification de données biométriques peut être relié par le réseau de communication à une pluralité de modules de saisie de données biométriques.

Selon une autre caractéristique, la valeur de diversification est générée par le module de vérification lui-même.

Les modules de saisie de données biométriques et le module de vérification peuvent être reliés par un réseau de communication non sécurisé.

D'autres particularités et avantages de l'invention apparaîtront clairement à la lecture de la description qui est faite ci-après et qui est donnée à titre illustratif et non limitatif en regard des dessins annexés sur lesquels :

- La figure 1, illustre de façon schématique la mise en oeuvre d'un procédé d'authentification sécurisé selon l'invention,
- la figure 2, illustre un schéma d'implémentation pour la mise en oeuvre du procédé dans un module de saisie biométrique et dans un module de vérification biométrique distant,
- la figure 3, illustre un système d'authentification de données biométriques selon l'invention,
- la figure 4, représente une variante du système d'authentification mettant en oeuvre le procédé selon l'invention.

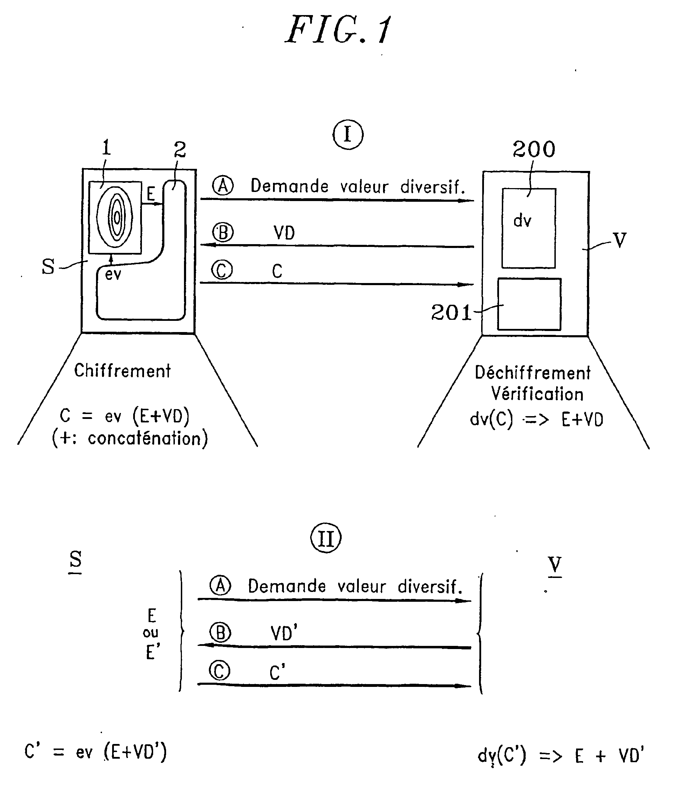

On va se reporter maintenant pour la suite de la description au schéma de la figure 1 dans sa partie I et dans sa partie II illustrant respectivement une première et une deuxième activation du procédé d'authentification biométrique.

La réalisation qui est donnée à titre d'exemple utilise comme protocole de cryptographie un algorithme à clé publique tel que l'algorithme RSA (Rivest Shamir Adleman).

L'algorithme RSA n'est pas le seul protocole pouvant convenir à la mise en oeuvre de l'invention. Tous les protocoles d'échange de clé comme ceux décrits dans la norme ISO/IEC DIS 11770-3 Informations Technology Security Techniques Key Management-part 3 : *Mechanism Using Asymmetric Techniques*, conviennent dans la mesure où le mécanisme utilisé permet l'authentification de l'entité en charge de vérifier l'identification/l'authentification biométrique et dans la mesure où cette entité est celle qui émet l'élément de diversification comme cela va être décrit dans la suite.

Le module de saisie biométrique S utilise une valeur dite de diversification VD pour protéger la communication des éléments biométriques de l'utilisateur contre le rejeu. Cette valeur peut être une valeur aléatoire, le résultat d'un compteur, un élément de temps, etc..

Le processus biométrique est activé dès lors qu'un utilisateur active le module de saisie S en se présentant devant le capteur biométrique 1.

L'activation provoque la génération d'une valeur de diversification VD.

Dans un mode de réalisation d'implémentation du procédé illustré par cette figure 1, la génération de la valeur de diversification est faite par le module de vérification V.

C'est pourquoi l'activation du procédé se traduit pour ce mode de réalisation, par une demande de valeur de diversification VD du module de saisie S au module de vérification V (action A sur le dessin).

Le module de vérification biométrique V fournit alors une valeur de diversification au module de saisie biométrique S (action B). Le module de saisie biométrique S extrait les éléments caractéristiques E de l'élément biométrique, y associe l'élément de diversification VD et effectue une opération de chiffrement C portant principalement sur ces paramètres, sous le contrôle de la fonction cryptographique asymétrique publique $e_v$ et envoie le résultat C au module de vérification (action C).

L'opération de chiffrement se traduit par la relation suivante :

$$C = e_v \ (E+VD).$$

(le signe « + » symbolise une opération de concaténation des données.)

Le calcul cryptographique permet de garantir que seul le possesseur de la clé privée appropriée sera en mesure d'interpréter correctement les données biométriques envoyées et de vérifier que l'élément de diversification a été pris en compte et ceci en vérifiant que :

Dv(C) est égale à (E+VD) ; dv étant la fonction de déchiffrement.

Le rejeu est évité car si une nouvelle procédure d'authentification est mise en oeuvre pour une même personne, c'est-à-dire une personne qui aurait une même donnée biométrique E, la valeur de diversification qui est générée (et envoyée par le système de vérification) ne sera pas la même et sera égale à une valeur VD' comme l'illustre la partie II du schéma de la figure 1. Autrement dit une personne mal intentionnée qui aurait pendant l'étape I réussi à obtenir l'information C sur la ligne et rejouerait cette information C de chiffrement, aboutirait à un échec au moment de la vérification car la valeur de diversification n'est plus VD mais une nouvelle valeur VD'.

Selon le mode de réalisation qui vient d'être décrit, l'élément de diversification VD est généré par le module de vérification biométrique et envoyé au module de saisie biométrique (action A).

Selon un exemple de procédé d'authentification biométrique sécurisé, il peut être envisagé que la valeur de diversification soit générée par le module de saisie biométrique lui-même. Dans ce cas, le module de vérification biométrique devra être en mesure de générer lui aussi cette valeur de diversification. On comprend que dans ce cas il ne s'agira pas d'une valeur aléatoire mais d'une date par exemple. Ainsi, le module de vérification sera en mesure de vérifier que les données envoyées ne sont pas le rejeu d'un envoi précédent.(L'action A disparaît dans ce mode de réalisation).

Selon ce mode de réalisation le module de saisie biométrique comporte en mémoire la clé publique de l'algorithme de cryptographie asymétrique à clé publique, pour effectuer le calcul cryptographique sous le contrôle de la clé cryptographique asymétrique publique du module de vérification biométrique. Ce calcul cryptographique permet comme on l'a dit de garantir que seul le module de vérification biométrique, possesseur de la clé privée appropriée $d_v$ sera en mesure d'interpréter correctement les données biométriques envoyées et de vérifier que la valeur de diversification a été prise en compte.

Selon un autre mode de réalisation il peut être envisagé que la clé stockée en permanence dans une mémoire du module de saisie biométrique soit une clé de vérification de certificat. Dans ce cas le module de vérification biométrique V envoie au module de saisie biométrique un élément de diversification VD et sa clé publique de chiffrement certifiée Cert (PUBe$_v$). Le certificat est vérifié avec la clé contenue en permanence dans la mémoire du module de saisie biométrique. Après vérification positive du certificat, le module de saisie biométrique utilise la clé publique du module de vérification biométrique pour assurer la confidentialité des données biométriques qu'il va ensuite transmettre au module de vérification biométrique.

Selon un autre mode de réalisation il peut être envisagé que le module de saisie génère une clé secrète cl pour chiffrer les données à transmettre au moyen d'un algorithme symétrique utilisant cette cl. Typiquement l'algorithme utilisé pourra être un algorithme triple DES (Data Encryption Standard). Le module de saisie chiffre alors les données concaténées E+VD au moyen de cet algorithme symétrique et de la clé secrète cl générée à cette fin et transmet les données ainsi chiffrées au module de vérification. Comme le module de vérification ne possède pas la clé secrète générée par le module de saisie, ce dernier envoie la clé secrète chiffrée par l'algorithme à clé publique pour lui permettre de déchiffrer les données reçues. Le module de vérification réalise la fonction inverse correspondant à l'algorithme de chiffrement pour obtenir la valeur déchiffrée E+VD.

Il peut être prévu en outre que la clé privée cl soit concaténée à un aléa et de chiffrer la donnée ainsi obtenue au moyen de l'algorithme à clé publique.

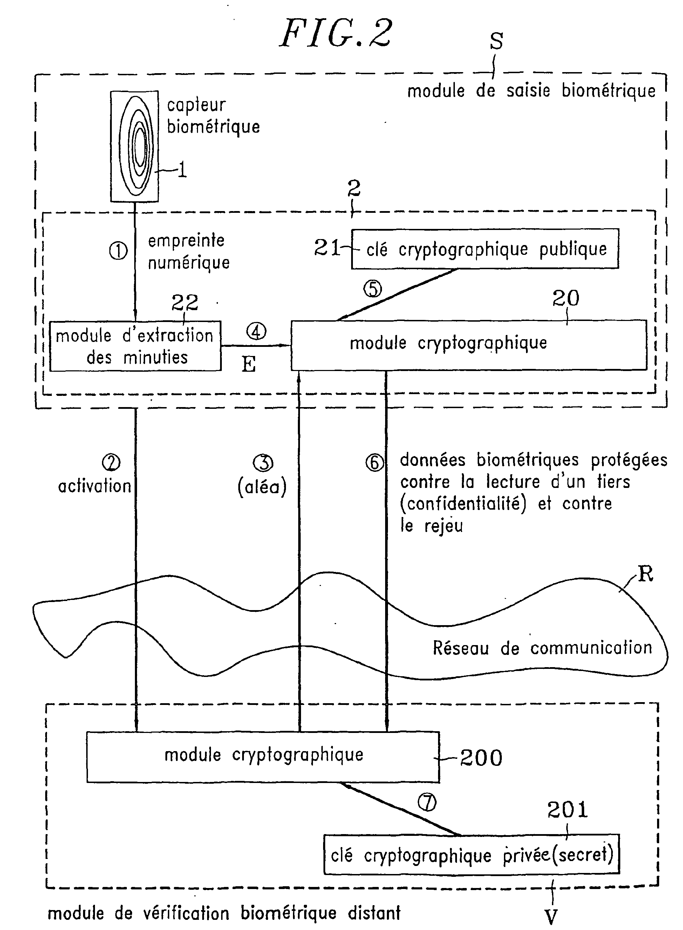

On va maintenant se reporter au schéma de la figure 2. Ce schéma illustre l'implémentation du procédé selon l'invention dans un module de saisie biométrique S et dans un module de vérification biométrique distant V. Le module de saisie biométrique comporte de manière connue en soi un capteur biométrique 1. Ce capteur fournit une empreinte numérique d'un utilisateur du système à un module d'extraction de minuties 22 apte à envoyer les éléments E issus de cette extraction au module cryptographique 20 résidant dans le module de saisie biométrique S. Le module de cryptographie est réalisé par exemple par un cryptoprocesseur du commerce associé à une mémoire non volatile 21 comprenant la clé publique, à savoir les paramètres $PUBe_v$, (si $PUBe_v$ est le nom de cette clé).

Comme on peut le suivre à partir de la numérotation 1 à 7 apparaissant sur ce schéma, lorsqu'un opérateur désire effectuer une opération d'authentification il se présente devant le capteur biométrique 1 qui réalise une empreinte numérique d'une donnée biométrique de l'utilisateur. Le capteur transmet cette empreinte au module d'extraction des minuties 22. Le module d'extraction transmet au module cryptographique les données issues de cette extraction et le module cryptographique réalise l'opération de chiffrement sur ces données à partir des paramètres de l'algorithme de cryptographie et après avoir reçu du module de vérification biométrique distant la donnée de diversification VD. Le module de vérification biométrique est activé dès l'activation du capteur biométrique 1.

Le module de vérification V comporte également un module cryptographique 200 associé à une mémoire non volatile 201 qui stocke la clé privée, c'est-à-dire le secret utilisé dans l'algorithme cryptographique à clé publique, à savoir le paramètre $PRIVd_v$ (si $PRIVd_v$ est le nom de la clé privée).

Conformément à l'invention et à tous ses modes de réalisation, il n'y a pas de stockage de secret dans le module de saisie biométrique. Ce module de saisie biométrique est un module qui peut être implanté dans des bâtiments publics et relié à travers un réseau de communication R à un module de vérification biométrique V, qui lui va détenir le secret.

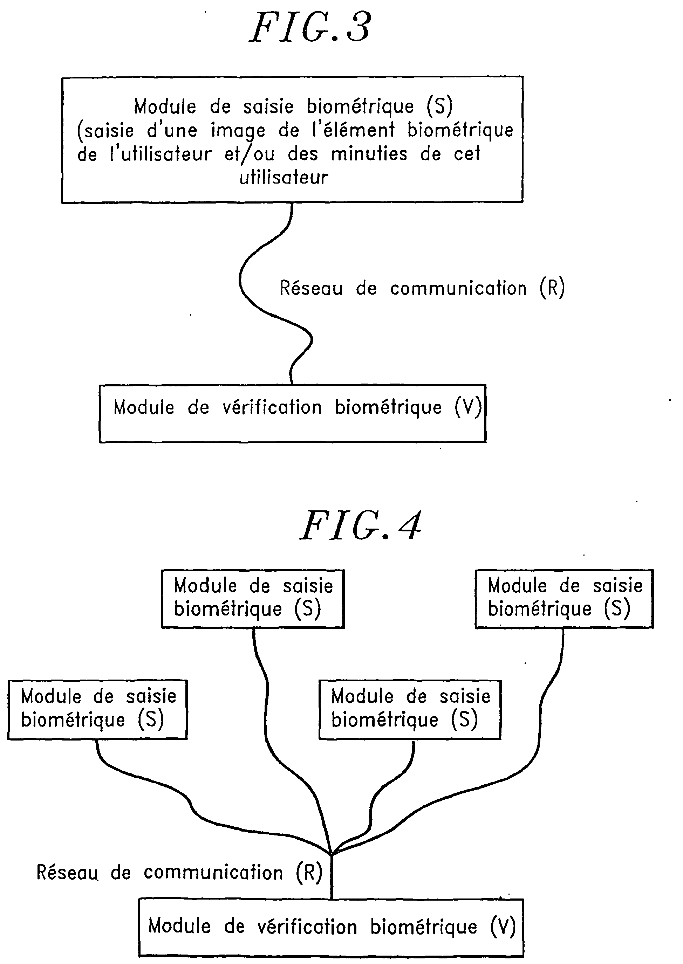

Le schéma de la figure 3 illustre un système d'authentification mettant en oeuvre le procédé conforme à l'invention.

Comme on peut le voir sur le schéma de la figure 4, le procédé conforme à l'invention est tout à fait adapté à une implantation d'un système d'authentification dans laquelle plusieurs modules de saisie biométriques S indépendants et distants peuvent être reliés à travers un réseau de communication à un seul et même module de vérification biométrique V.

Ainsi, la présente invention permet d'implémenter un procédé d'identification/authentification biométrique sans que les vérifications biométriques soient effectuées en local (par rapport au module de saisie biométrique et à l'utilisateur), sans craindre le vol et le rejeu de données biométriques et sans placer d'éléments cryptographiques secrets dans le module de saisie biométrique.

Il peut par exemple être envisagé un mécanisme de contrôle d'accès biométrique équipé de plusieurs modules de saisie biométrique reliés à un seul module de vérification biométrique centralisé, comme l'illustre la figure 4.

Pour illustration il peut être envisagé un service de contrôle d'accès appliqué à l'ouverture-fermeture d'un accès physique (portes d'immeubles, etc.) ou d'un accès logique (serveur informatique, etc.).

**Revendications**

1. Procédé d'authentification biométrique sécurisé, comprenant la communication de données biométriques chiffrées par au moins un module de saisie de données biométriques (S) ne détenant pas de clé secrète, à un module de vérification (V), ledit procédé comprenant les étapes suivantes :

   - pour le module de saisie de données biométriques,

      - saisir les données biométriques (E) d'un utilisateur,
      - chiffrer les données biométriques (E) et une valeur de diversification (VD) par un algorithme de chiffrement pour générer des données chiffrées (C),
      - transmettre les données chiffrées (C) au module de vérification (V),

   - pour le module de vérification (V),

      - déchiffrer les données (C) reçues au moyen d'une clé secrète appropriée et qui permet de vérifier que la valeur de diversification donnée (VD) a été prise en compte dans le chiffrement,

   une valeur de diversification (VD) distincte étant générée pour chaque authentification biométrique effectuée par le module de vérification (V), ledit procédé étant **caractérisé en ce que** la valeur de diversification (VD) est générée par le module de vérification (V) et communiquée au module de saisie (S), et **en ce que** la valeur de diversification (VD) est concaténée aux données biométriques (E), le module de saisie (S) chiffrant ces données concaténées.

2. Procédé d'authentification biométrique sécurisé selon la revendication 1, **caractérisé en ce que** la valeur de diversification (VD) est une donnée aléatoire.

3. Procédé d'authentification biométrique sécurisé selon la revendication 1 ou 2, **caractérisé en ce que** la valeur de diversification (VD) est le résultat d'un comptage.

4. Procédé d'authentification biométrique sécurisé selon l'une quelconque des revendications précédentes, **caractérisé en ce que** la valeur de diversification (VD) est une donnée temporelle telle que la date ou l'heure.

5. Procédé d'authentification selon l'une quelconque des revendications précédentes, **caractérisé en ce que** l'algorithme de chiffrement est un algorithme de chiffrement à clé publique.

6. Procédé d'authentification biométrique sécurisé selon la revendication 5, **caractérisé en ce que** la clé publique du module de vérification est communiqué au(x) module(s) de saisie (S) par ledit module de vérification (V) à chaque demande d'authentification.

7. Procédé d'authentification biométrique sécurisé selon la revendication 5 ou 6, **caractérisé en ce que** la clé publique est stockée dans le module de saisie (S) de données biométriques.

8. Procédé d'authentification biométrique sécurisé selon les revendications 5 à 7, **caractérisé en ce que** la clé stockée dans le module de saisie (S) est une clé de vérification d'un certificat, ledit certificat étant le certificat de clé publique du module de vérification (V) et étant communiqué par ce dernier au module de saisie (S).

9. Procédé d'authentification selon l'une quelconque des revendications 1 à 5, **caractérisé en ce que** l'algorithme de chiffrement est un algorithme symétrique à clé secrète.

10. Procédé d'authentification selon la revendication 9, **caractérisé en ce que** la clé secrète est générée par le module de saisie.

11. Procédé d'authentification selon la revendication 9, **caractérisé en ce que** la clé secrète est chiffrée par un algorithme asymétrique et le résultat du chiffrement est communiqué au module de vérification (V) pour lui permettre de déchiffrer les données biométriques.

12. Système d'authentification de données biométriques comprenant un module de saisie de données biométriques (S) ne détenant pas de clé secrète et un module de vérification des données biométriques (V), ledit module de saisie comportant des moyens (20) pour effectuer des opérations cryptographiques pour chiffrer des données biométriques (E) et introduire une valeur de diversification (VD) différente pour chaque opération cryptographique, et ledit module de vérification (V) comportant des moyens (200) pour effectuer des opérations cryptographiques pour déchiffrer, au moyen d'une clé secrète appropriée que ledit module de vérification est seul à détenir, des données biométriques chiffrées reçues à travers un réseau de communication, **caractérisé en ce que** ledit module de vérification (V) génère et communique audit module de saisie (S) ladite valeur de diversification distincte (VD), lesdits moyens (20) du module de saisie (S) étant aptes à concaténer ladite valeur de diversification (VD) aux données biométriques (E) et à chiffrer lesdites données concaténées, et lesdits moyens (200) du module de vérification de données (V) étant aptes à déchiffrer des données biométriques concaténées avec ladite valeur de diversification et chiffrées, et à vérifier que la valeur de diversification (VD) communiquée a été prise en compte dans le chiffrement.

13. Système selon la revendication 12, **caractérisé en ce que** le module de vérification de données biométriques (V) est relié par le réseau de communication (R) à une pluralité de modules de saisie de données biométriques (S).

14. Système selon la revendication 13, **caractérisé en ce que** le module de vérification de données biométriques (V) est relié par un réseau de communication (R) non sécurisé aux modules de saisie de données biométriques (S).

15. Module de saisie de données biométriques (S) ne détenant pas de clé secrète, apte à être relié par un réseau de communication (R) à un module de vérification (V), ledit module de saisie (S) comportant des moyens (20) pour effectuer des opérations cryptographiques pour chiffrer des données biométriques (E) et introduire une valeur de diversification (VD) différente pour chaque opération cryptographique, **caractérisé en ce que** ledit module de saisie (S) est apte à recevoir depuis le module de vérification (V) une valeur de diversification (VD), lesdits moyens (20) du module de saisie (S) étant aptes à concaténer aux données biométriques (E) la valeur de diversification (VD) générée et à chiffrer lesdites données concaténées.

16. Module de vérification de données biométriques (V), comportant des moyens (200) pour effectuer des opérations cryptographiques, pour déchiffrer, au moyen d'une clé secrète appropriée qu'il est seul à détenir, des données biométriques (E) chiffrées par un module de saisie (S) et reçues à travers un réseau de communication (R), **caractérisé en ce que** ledit module de vérification (V) est apte à générer et communiquer par le réseau de communication (R) une valeur de diversification (VD) distincte au module de saisie (S), lesdits moyens (200) du module de vérification de données (V) étant aptes à déchiffrer des données biométriques (E) concaténées avec ladite valeur de diversification (VD) et chiffrées, et vérifier que la valeur de diversification (VD) communiquée a été prise en compte dans le chiffrement.

**Claims**

1. Secure biometric authentication method comprising the communication of biometric data encrypted by at least one biometric data input module (S) not holding a secret key to a verification module (V), said method comprising:

   - for the biometric data input module:

     inputting the biometric data (E) of a user; encrypting the biometric data (E) and a diversification value (VD) by an encryption algorithm to generate encrypted data (C); transmitting the encrypted data (C) to the verification module (V);

   - for the verification module (V):

     decrypting the received data (C) using an appropriate secret key which enables to verify that the given diversification value has been taken into account in the encryption;

   a different diversification value (VD) being generated for each biometric authentication performed by the verification module (V),
   said method being **characterised in that** the diversification value (VD) is generated by the verification module (V) and communicated to the input module (S), and **in that** the diversification value (VD) is concatenated to the biometric data (E), the input module (S) encrypting these concatenated data.

2. Secure biometric authentication method according to claim 1, **characterised in that** the diversification value (VD) is a random data element.

3. Secure biometric authentication method according to claim 1 or 2, **characterised in that** the diversification value (VD) is the result of a counting.

4. Secure biometric authentication method according to any of the preceding claims, **characterised in that** the diversification value (VD) is a time data element such as date or hour.

5. Secure biometric authentication method according to any of the preceding claims, **characterised in that** the encryption algorithm is a public key encryption algorithm.

6. Secure biometric authentication method according to claim 5, **characterised in that** the public key of the verification module is communicated to the input module(s) (S) by said verification module (V) on each request for authentication.

7. Secure biometric authentication method according to claim 5 or 6, **characterised in that** the public key is stored in the biometric data input module (S).

8. Secure biometric authentication method according to any of claims 5 to 7, **characterised in that** the key stored in the input module (S) is a verification key of a certificate, said certificate being the public key certificate of the verification module (V) and being communicated by the latter to the input module (S).

9. Authentication method according to any of claims 1 to 5, **characterised in that** the encryption algorithm is a secret key symmetrical algorithm.

10. Authentication method according to claim 9, **characterised in that** the secret key is generated by the input module.

11. Authentication method according to claim 9, **characterised in that** the secret key is encrypted by an asymmetrical algorithm and the result of the encryption is communicated to the verification module (V) to enable the latter to decrypt the biometric data.

12. Biometric data authentication system comprising a biometric data input module (S) not holding a secret key and a biometric data verification module (V), said input module comprising means (20) for carrying out cryptographic operations for encrypting biometric data (E) and for introducing a different diversification value (VD) for each cryptographic operation, and said verification module (V) comprising means (200) for carrying out cryptographic operations for decrypting, using an appropriate secret key which said verification module is the only one to hold, encrypted biometric data received via a communication network, **characterized in that** said verification module (V) generates and communicates to said input module (S) said different diversification value (VD), said means (20) of the input module (S) being adapted to concatenate said diversification value (VD) to the biometric data (E) and to encrypt said concatenated data, and said means (200) of the data verification module (V) being adapted to decrypt the biometric data concatenated with said diversification value and encrypted, and to verify that the communicated diversification value (VD) has been taken into account in the encryption.

13. System according to claim 12, **characterised in that** the biometric data verification module (V) is connected by the communication network (R) to a plurality of biometric data input modules (S).

14. System according to claim 13, **characterised in that** the biometric data verification module (V) is connected by a non-secure communication network (R) to the biometric data input modules (S).

15. Biometric data input module (S) that does not hold a secret key, adapted to be connected by a communication network (R) to a verification module (V), said input module comprising means (20) for carrying out cryptographic operations to encrypt biometric data (E) and to introduce a different diversification value (VD) for each cryptographic operation, **characterised in that** said input module (S) is adapted to receive from the verification module (V) a diversification value (VD), said means (20) of the input module (S) being adapted to concatenate the generated diversification value (VD) to the biometric data (E) and to encrypt said concatenated data.

16. Biometric data verification module (V) comprising means (200) for carrying out cryptographic operations for decrypting using an appropriate secret key which it is the only one to hold, biometric data (E) encrypted by an input module (S) and received via a communication network (R), **characterized in that** said verification module (V) is adapted to generate and to communicate via the communication network (R) a different diversification value (VD) to the input module (S), said means (200) of the data verification module (V) being adapted to decrypt the biometric data (E) concatenated with said diversification value and encrypted, and to verify that the communicated diversification value (VD) has been taken into account in the encryption.

**Patentansprüche**

1. Geschütztes biometrisches Authentifizierungsverfahren, umfassend die Weitergabe von chiffrierten biometrischen Daten durch mindestens ein Modul zur Erfassung von biometrischen Daten (S), das keinen geheimen Schlüssel besitzt, an ein Überprüfungsmodul (V), wobei das Verfahren darin besteht:

- für das Modul zur Erfassung von biometrischen Daten:

   - die biometrischen Daten (E) eines Benutzers zu erfassen,
   - die biometrischen Daten (E) und einen Diversifikationswert (VD) durch einen Chiffrieralgorithmus zu chiffrieren, um chiffrierte Daten (C) zu erzeugen,
   - die chiffrierten Daten (C) an das Überprüfungsmodul (V) zu übertragen,

- für das Überprüfungsmodul:

   - die empfangenen Daten (C) mit Hilfe eines geeigneten Geheimcodes zu dechiffrieren, der es ermöglicht, zu überprüfen, ob der gegebene Diversifikationswert (VD) in der Chiffrierung berücksichtigt wurde,

wobei ein getrennter Diversifikationswert (VD) für jede vom Überprüfungsmodul (V) durchgeführte biometrische Authentifizierung erzeugt wird, wobei das Verfahren **dadurch gekennzeichnet ist, daß** der Diversifikationswert (VD) vom Überprüfungsmodul (V) erzeugt und an das Erfassungsmodul (S) weitergegeben wird, und daß der Diversifikationswert (VD) an die biometrischen Daten (E) angehängt wird, wobei das Erfassungsmodul (S) diese aneinander gehängten Daten chiffriert.

2. Geschütztes biometrisches Authentifizierungsverfahren nach Anspruch 1, **dadurch gekennzeichnet, daß** der Diversifikationswert (VD) ein Zufallsdatum ist.

3. Geschütztes biometrisches Authentifizierungsverfahren nach Anspruch 1 oder 2, **dadurch gekennzeichnet, daß** der Diversifikationswert (VD) das Ergebnis einer Zählung ist.

4. Geschütztes biometrisches Authentifizierungsverfahren nach einem der vorhergehenden Ansprüche, **dadurch gekennzeichnet, daß** der Diversifikationswert (VD) ein Zeitdatum, wie ein Datum oder eine Uhrzeit, ist.

5. Authentifizierungsverfahren nach einem der vorhergehenden Ansprüche, **dadurch gekennzeichnet, daß** der Chiffrieralgorithmus ein Chiffrieralgorithmus mit öffentlichem Schlüssel ist.

6. Geschütztes biometrisches Authentifizierungsverfahren nach Anspruch 5, **dadurch gekennzeichnet, daß** der öffentliche Schlüssel des Überprüfungsmoduls dem (den) Erfassungsmodul(en) (S) vom Überprüfungsmodul (V) bei jeder Authentifizierungsanforderung mitgeteilt wird.

7. Geschütztes biometrisches Authentifizierungsverfahren nach Anspruch 5 oder 6, **dadurch gekennzeichnet, daß** der öffentliche Schlüssel im Erfassungsmodul (S) für biometrische Daten gespeichert ist.

8. Geschütztes biometrisches Authentifizierungsverfahren nach den Ansprüchen 5 bis 7, **dadurch gekennzeichnet, daß** der im Erfassungsmodul (S) gespeicherte Schlüssel ein Schlüssel zur Überprüfung eines Zertifikats ist, wobei das Zertifikat das Zertifikat des öffentlichen Schlüssels des Überprüfungsmoduls (V) ist und von diesem letztgenannten dem Erfassungsmodul (S) mitgeteilt wird.

9. Authentifizierungsverfahren nach einem der Ansprüche 1 bis 5, **dadurch gekennzeichnet, daß** der Chiffrieralgorithmus ein symmetrischer Algorithmus mit geheimem Schlüssel ist.

10. Authentifizierungsverfahren nach Anspruch 9, **dadurch gekennzeichnet, daß** der geheime Schlüssel vom Erfassungsmodul generiert wird.

11. Authentifizierungsverfahren nach Anspruch 9, **dadurch gekennzeichnet, daß** der geheime Schlüssel durch einen asymmetrischen Algorithmus chiffriert und das Ergebnis der Chiffrierung dem Überprüfungsmodul (V) mitgeteilt wird, um es ihm zu ermöglichen, die biometrischen Daten zu dechiffrieren.

12. Authentifizierungsverfahren von biometrischen Daten, umfassend ein Erfassungsmodul (S) für biometrische Daten, das keinen geheimen Schlüssel besitzt, und ein Überprüfungsmodul (V) der biometrischen Daten, wobei das Erfassungsmodul Mittel (20) umfaßt, um kryptographische Vorgänge durchzuführen, um biometrische Daten (E) zu chiffrieren und einen unterschiedlichen Diversifikationswert (VD) für jeden kryptographischen Vorgang einzuführen, wobei das Überprüfungsmodul (V) Mittel (200) umfaßt, um kryptographische Vorgänge durchzuführen, um mit Hilfe eines geeigneten geheimen Schlüssels, den das Überprüfungsmodul als einziges besitzt, chiffrierte biometrische Daten, die über ein Kommunikationsnetz erhalten werden, zu dechiffrieren, **dadurch gekennzeichnet, daß** das Überprüfungsmodul (V) den unterschiedlichen Diversifikationswert (VD) generiert und diesen dem Erfassungsmodul (S) mitteilt, wobei die Mittel (20) des Erfassungsmoduls (S) den Diversifikationswert (VD) an die biometrischen Daten (E) anreihen und die aneinander gereihten Daten chiffrieren kann, wobei die Mittel (200) des Datenüberprüfungsmoduls (V) an den Diversifikationswert angereihte und chiffrierte Daten dechiffrieren und überprüfen können, ob der mitgeteilte Diversifikationswert (VD) bei der Chiffrierung berücksichtigt wurde.

13. System nach Anspruch 12, **dadurch gekennzeichnet, daß** das Überprüfungsmodul (V) von biometrischen Daten über das Kommunikationsnetz (R) mit einer Vielzahl von Erfassungsmodulen (S) für biometrische Daten verbunden ist.

14. System nach Anspruch 13, **dadurch gekennzeichnet, daß** das Überprüfungsmodul (V) für biometrische Daten über ein nicht gesichertes Kommunikationsnetz (R) mit den Erfassungsmodulen (S) für biometrische Daten verbunden ist.

15. Erfassungsmodul (S) für biometrische Daten, das keinen geheimen Schlüssel besitzt und über ein Kommunikationsnetz (R) mit einem Überprüfungsmodul (V) verbunden werden kann, wobei das Erfassungsmodul (S) Mittel (20) umfaßt, um kryptographische Vorgänge durchzuführen, um biometrische Daten (E) zu chiffrieren und einen unterschiedlichen Diversifikationswert (VD) für jeden kryptographischen Vorgang einzuführen, **dadurch gekennzeichnet, daß** das Erfassungsmodul (S) vom Überprüfungsmodul (V) einen Diversifikationswert (VD) erhalten kann, wobei die Mittel (20) des Erfassungsmoduls (S) den generierten Diversifikationswert (VD) an die biometrischen Daten (E) anreihen und die aneinander gereihten Daten chiffrieren können.

16. Überprüfungsmodul (V) von biometrischen Daten, umfassend Mittel (200), um kryptographische Vorgänge durchzuführen, um mit Hilfe eines geeigneten geheimen Schlüssels, den alleine es besitzt, biometrische Daten (E), die von einem Erfassungsmodul (S) chiffriert und über ein Kommunikationsmodul (R) erhalten wurden, zu dechiffrieren, **dadurch gekennzeichnet, daß** das Überprüfungsmodul (V) über das Kommunikationsnetz (R) einen unterschiedlichen Diversifikationswert (VD) generieren und dem Erfassungsmodul (S) mitteilen kann, wobei die Mittel (200) des Datenüberprüfungsmoduls (V) biometrische Daten (E), die an den Diversifikationswert (VD) gereiht und chiffriert sind, dechiffrieren und überprüfen können, ob der mitgeteilte Diversifikationswert (VD) bei der Chiffrierung berücksichtigt wurde.

# FIG.1

Ⓘ

Ⓐ Demande valeur diversif.

Ⓑ VD

Ⓒ C

200

dv

V

201

Chiffrement

$C = ev\ (E+VD)$
$(+:\ concaténation)$

Déchiffrement
Vérification
$dv(C) \Rightarrow E+VD$

Ⓘ

S

E
ou
E'

Ⓐ Demande valeur diversif.

Ⓑ VD'

Ⓒ C'

V

$C' = ev\ (E+VD')$

$dv(C') \Rightarrow E + VD'$

# FIG.2

module de saisie biométrique

capteur biométrique —1

① empreinte numérique

21 — clé cryptographique publique

⑤

22
module d'extraction des minuties

④
E

20
module cryptographique

② activation

③ (aléa)

⑥ données biométriques protégées contre la lecture d'un tiers (confidentialité) et contre le rejeu

R

Réseau de communication

module cryptographique — 200

⑦

201
clé cryptographique privée (secret)

module de vérification biométrique distant

V

# *FIG.3*

Module de saisie biométrique (S)
(saisie d'une image de l'élément biométrique
de l'utilisateur et/ou des minuties de cet
utilisateur

Réseau de communication (R)

Module de vérification biométrique (V)

# *FIG.4*

Module de saisie
biométrique (S)

Module de saisie
biométrique (S)

Module de saisie
biométrique (S)

Module de saisie
biométrique (S)

Réseau de communication (R)

Module de vérification biométrique (V)

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 983209 A
- WO 9825385 A
- GB 2329499 A
- WO 9705578 A
- EP 0986209 A